# EUROPÄISCHE PATENTSCHRIFT

(11) **EP 1 995 134 B1**
(45) Veröffentlichungstag und Bekanntmachung des Hinweises auf die Patenterteilung: **12.10.2011**
(21) Anmeldenummer: 08002611.5
(22) Anmeldetag: 13.02.2008
(51) Int. Cl.: B60T 7/10

(54) **Handbremse für ein Kraftfahrzeug**
Hand brake for a motor vehicle
Frein à main pour véhicule automobile

(30) Priorität: 25.05.2007 DE 102007024583
(43) Veröffentlichungstag der Anmeldung: 26.11.2008
(73) Patentinhaber: AUDI AG, 85045 Ingolstadt (DE)
(72) Erfinder: Murrweiß, Stefan, 74081 Heilbronn (DE); Koestner, Eric, 67105 Schifferstadt (DE)
(74) Vertreter: Asch, Konrad

(56) Entgegenhaltungen:
- DE-A1-102004 028 737
- US-A1- 2006 070 485
- US-A1- 2007 295 149

## Beschreibung

Die Erfindung betrifft eine Handbremse für ein Kraftfahrzeug gemäß dem Oberbegriff des Patentanspruches 1.

Solche auch als Feststellbremsen bezeichnete Bremsen umfassen einen schwenkbar gelagerten von einer unteren Freigabeposition in eine obere Bremsposition manuell betätigbaren Handhebel, dessen jeweilige Einstelllage, die eine der möglichen Bremspositionen bestimmt, das durch ein über einen Betätigungsknopf lösbares Gesperre fixiert ist.

Als Gesperre werden in der Regel an sich bekannte Zahnrichtgesperre verwendet, die ein selbsttätiges Lösen der betätigten Handbremse, also das Bewegen des Handhebels aus der eingestellten oberen Brems- in die untere Freigabeposition verhindern.

In Folge der großen Bremskräfte unterliegen solche Zahnrichtgesperre einem hohen Verschleiß und bedürfen daher der häufigen Nachstellung, aber auch die Geräusche der zugehörigen Zahnklinken bei deren Betätigung sind störend.

Der Erfindung liegt daher die Aufgabe zu Grunde, hier durch eine vorteilhafte Weiterbildung solcher Handbremsen Abhilfe zu schaffen.

Diese Aufgabe ist gemäß der Erfindung durch die Merkmale des Patentanspruches 1 gelöst.

Weitere Merkmale der Erfindung ergeben sich aus den Unteransprüchen.

In Folge des erfindungsgemäßen Austausches der Zahnklinke des Zahnrichtgesperres durch ein in ein feststehendes Zahnsegment einschwenkbares Zahnrad mit einem Freilaufgesperre, das sich nur in eine Richtung drehen lässt, wird eine verschleißarme annährend geräuschlos arbeitende und zudem leicht bedienbare Handbremse geschaffen, die sich ohne großen Aufwand herstellen, montieren und warten lässt. Da die wechselseitig ineinandergreifenden Zahnkränze von Zahnrad und Zahnsegment eine formschlüssige Kupplung bilden wird die vom Handhebel ausgelöste Bremsbewegung schlupffrei übertragen und gehalten was zu erhöhtem Bedienungskomfort führt.

Freilaufgesperre sind an sich bekannt. Auch ist die Verwendung eines in ein Zahnsegment eingreifendes Zahnrad, dessen Drehbewegungen sperrbar sind, im Zusammenhang mit einer Handbremse für Kraftfahrzeuge bekannt; vergleiche DE 10 2004 028 737 A1.

Da dort die Aufgabe zu lösen ist, den Handhebel der Handbremse eines Kraftfahrzeuges unabhängig von der Bremsstellung der Handbremse zu versenken, um zum Beispiel ein Aussteigen aus dem Kraftfahrzeug zur Beifahrerseite hin bei angezogener, also in ihrer oberen Position befindlichen Handbremse zu ermöglichen ist dort das Zahnrad in beiden möglichen Drehrichtungen über eine betätigbare Kupplung sperrbar. Dies erfolgt mittels einer über einen Bowdenzug zu betätigenden Federbandbremse, deren Einstelllagen zudem über weiter Schaltmittel zu überwachen sind, um zu Unfällen führende Fehlbedienungen mit Sicherheit vermeiden zu können. Abgesehen von der Kompliziertheit des technischen Aufbaus mit einer Vielzahl von ineinandergreifenden und unterschiedlich zu betätigenden Bauteilen einer solchen Anordnung gibt diese keine Anregungen zur Lösung der hier gestellten Aufgabe.

Die Erfindung ist nachfolgend anhand eines in der Zeichnung dargestellten Ausführungsbeispiels beschrieben. Im Einzelnen zeigen:
- Fig. 1: eine teilweise im Schnitt dargestellte Seitenansicht der Handbremse gemäß der Erfindung in der nicht bremsenden Ruhelage,
- Fig. 2: die Handbremse nach Fig. 1 bei der Überführung in eine Bremsstellung und
- Fig. 3: die Handbremse nach Fig. 1 beim Lösen der Bremsstellung.

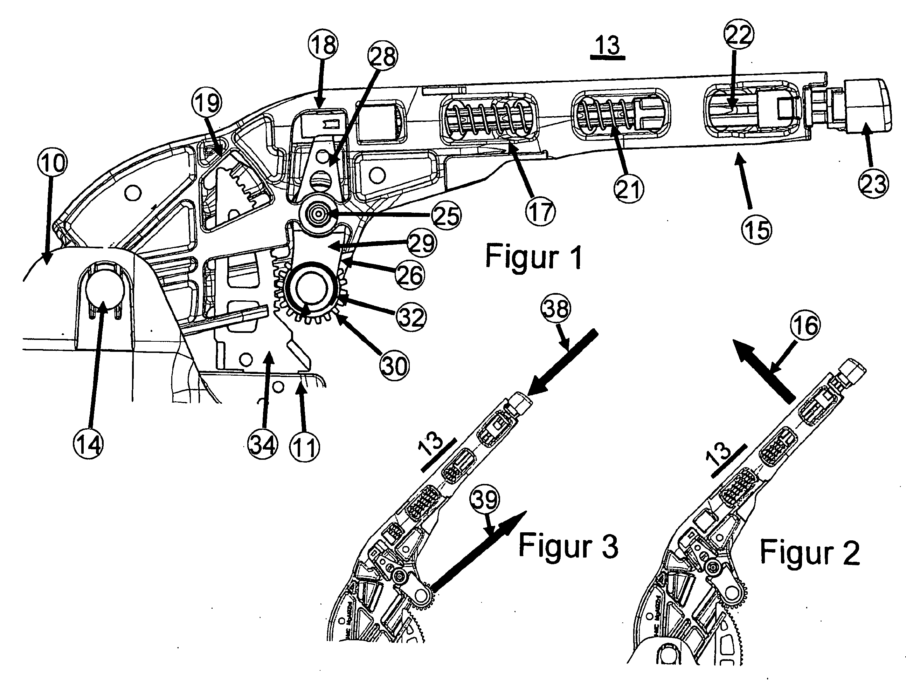

An einer Lagerlaschen 10 aufweisenden Befestigungsplatte 11 zum Verbinden mit einem nicht dargestellten Kraftfahrzeug ist ein Handhebel 13 mittels eines Lagerbolzens 14 schwenkbar gelagert, so dass dieser aus seiner in Fig. 1 dargestellten unteren Position nach oben - vgl. Pfeil 16 - in seine Bremsstellung manuell verschwenkt werden kann, wie dies in Figur 2 angedeutet ist. Der vorzugsweise aus Druckguss hergestellte in einen Handgriff 15 auslaufende Handhebel 13 weist mehrere Kammern 17, 18 und 19 auf, von denen die längs des Handgriffes 15 sich erstreckende Kammer 17 der hin und her beweglichen Lagerung eines von einer Feder 21 belastenden Druckstange 22 dient, die einen am freien Ende angeordneten Betätigungsknopf 23 trägt. Die Feder 21 hat das Bestreben die Druckstange 22 in Bezug auf Fig. 1 nach rechts zu bewegen, also in der dort dargestellten Stellung zu halten.

Die Kammer 18 ist senkrecht zur Kammer 17 angeordnet, kommuniziert mit dieser und trägt eine Lagerstelle 25 zur Aufnahme eines zweiarmigen Hebels 26, der mit seinem Hebelarm 28 an dem zugewandten Ende der Druckstange 22 angelenkt ist und am Hebelarm 29 ein Zahnrad 30 trägt. Das Zahnrad 30 ist mit einem als Freilauf dienenden nicht dargestellten Richtgesperre versehen, welches Drehungen des Zahnrades 30 im Gegenzeigersinne zulässt, im Uhrzeigersinne dagegen verhindert; vgl. Pfeil 32.

Die etwa parallel zur Kammer 18 verlaufende Kammer 19 umfasst ein mit der Befestigungsplatte 11 fest verbundenes Zahnsegment 34, in das dass Zahnrad 30, wie in Figur 1 dargestellt, eingreifen kann, solange über die gelenkige Verbindung Druckstange 22 / Hebelarm 28 und die Feder 21 die vorstehend beschriebene Anordnung in der in Figur 1 dargestellten Lage gehalten ist. Durch Ziehen des Handhebels 13 in Richtung des Pfeils 16 wird die hier nicht dargestellte Handbremse in an sich bekannter Weise betätigt. Hierbei kann das in das Zahlensegment 34 eingreifende Zahlenrad 30 sich auf diesem in Gegenzeigersinne abwälzen, wobei jedwedes Zurückstellen durch den in das Zahnrad 30 intrigierten Freilauf verhindert wird. Die Handbremse verbleibt daher in jeder manuell eingestellten Position.

Wird jedoch der Betätigungsknopf 23 entgegen der Wirkung der Druckfeder 21 in Bezug auf Figur 1 nach links bewegt so wird über die Verbindung 22/28 der zweiarmige Hebel 28 in Bezug auf Figur 1 im Gegenuhrzeigersinne verschwenkt und bringt damit das Zahnrad 30 außer Eingriffs mit dem Zahnsegment 34, wie dies in Figur 3 dargestellt und durch die Pfeile 38 und 39 angedeutet ist. Der Handhebel ist entsperrt und kann nunmehr in seine in Figur 1 dargestellte Ausgangslage zurückgesetzt werden und die damit verbundenen nicht dargestellten Bremsen sind gelöst. In der Ausgangslage des Handhebels 13 befindet sich das Zahnrad 30 wieder in Eingriff mit Zahnsegment 34, so dass ein neuer Handbremsvorgang in der vorstehend beschriebenen Weise durchgeführt werden kann.

### BEZUGSZEICHENLISTE

- 10: Lagerlaschen
- 11: Befestigungsplatte
- 13: Handhebel
- 14: Lagerbolzen (Schwenkachse)
- 15: Handgriff
- 16: Pfeil
- 17: Kammer
- 18: Kammer
- 19: Kammer
- 21: Druckfeder
- 22: Druckstange
- 23: Betätigungsknopf
- 25: Lagerstelle
- 26: Schalthebel
- 28: Hebelarm (Schalthebel)
- 29: Hebelarm (Schalthebel)
- 30: Zahnrad
- 32: Pfeil
- 34: Zahnsegment
- 38: Pfeil
- 39: Pfeil

## Patentansprüche

1. Handbremse für ein Kraftfahrzeug mit einem an einer Befestigungsplatte (11) schwenkbar gelagerten manuell betätigbaren Handhebel (13), dessen Bremspositionen bestimmenden Einstelllagen mittels eines lösbaren Richtgesperres (30, 34) in der jeweiligen Bremsposition festlegbar sind, **dadurch gekennzeichnet, dass** das Richtgesperre ein mit einem Zahnsegment (34) in Eingriff stehendes, nur in einer Drehrichtung drehbeweglich gelagertes Zahnrad (30) umfasst und dass das Zahnrad (30) für das Lösen der Handbremse aus der jeweiligen Bremsposition über ein mittels im Handhebel (13) längs verschiebbar gelagerten, von einer Feder (21) beaufschlagten manuell betätigbaren Druckstange (22) außer Eingriff mit dem Zahnsegment (34) bringbar ist.

2. Handbremse nach Anspruch 1, **dadurch gekennzeichnet, dass** die Drehrichtungssperre für das Zahnrad (30) ein Freilauf ist.

3. Handbremse nach den Ansprüchen 1 und 2, **dadurch gekennzeichnet, dass** das Zahnrad (30) auf einem Hebelarm (29) eines am Handhebel (13) schwenkbar gelagerten Schalthebels (26) drehbar gelagert ist, an dessen anderem Hebelarm (28) die federbelastete Druckstange (22) angelenkt ist.

4. Handbremse nach den Ansprüchen 1 bis 3, **dadurch gekennzeichnet, dass** das Zahnrad (30) über eine der Druckstange (22) zugeordneten Feder (21) in Eingriff mit dem Zahnsegment (34) gehalten ist.

5. Handbremse nach den Ansprüchen 1 bis 4, **dadurch gekennzeichnet, dass** dem freien Ende der Druckstange (22) ein Betätigungsknopf (23) zugeordnet ist.

6. Handbremse nach den Ansprüchen 1 bis 5, **dadurch gekennzeichnet, dass** das Zahnsegment (34) im Abstand zur Schwenkachse (14) des Handhebels (13) angeordnet ist und der Mittelpunkt des Teilkreises der Verzahnung des Zahnsegmentes 34 gleichachsig zur Schwenkachse (14) des Handhebels (13) angeordnet ist.

## Claims

1. Hand brake for a motor vehicle, with a manually actuable hand lever (13) which is mounted pivotably on a fastening plate (11) and the brake-position-determining setting positions of which can be fixed in the particular braking position by means of a releasable directional catch (30, 34), **characterized in that** the directional catch comprises a gearwheel (30) which is in engagement with a toothed segment (34) and is mounted rotatably only in one direction of rotation, and **in that**, for the release of the hand brake from the particular braking position, the gearwheel (30) can be brought out of engagement with the toothed segment (34) via a manually actuable plunger rod (22) which is mounted in a longitudinally displaceable manner in the hand lever (13) and is acted upon by a spring (21).

2. Hand brake according to Claim 1, **characterized in that** the direction of rotation catch for the gearwheel (30) is a freewheel.

3. Hand brake according to Claims 1 and 2, **characterized in that** the gearwheel (30) is mounted rotatably on a lever arm (29) of a gear shift lever (26), which is mounted rotatably on the hand lever (13) and to the other lever arm (28) of which the springloaded plunger rod (22) is coupled.

4. Hand brake according to Claims 1 to 3, **characterized in that** the gearwheel (30) is kept in engagement with the toothed segment (34) via a spring (21) assigned to the plunger rod (22).

5. Hand brake according to Claims 1 to 4, **characterized in that** an actuating button (23) is assigned to the free end of the plunger rod (22).

6. Hand brake according to Claims 1 to 5, **characterized in that** the toothed segment (34) is arranged at a distance from the pivot axis (14) of the hand lever (13) and the centre point of the reference circle of the toothing of the toothed segment (34) is arranged on the same axis of the pivot axis (14) of the hand lever (13).

## Revendications

1. Frein à main pour un véhicule automobile équipé d'un levier à main (13) actionnable à la main disposé de façon à pouvoir pivoter au niveau d'une plaque de fixation (11) et dont les positions de réglage déterminant les positions de freinage peuvent être déterminées dans la position de freinage respective à l'aide d'un verrou orientable (30, 34) amovible, **caractérisé en ce que** le verrou orientable comprend une roue dentée (30) en prise avec un segment denté (34) et disposée de façon à ne pouvoir tourner que dans une direction de rotation et que la roue dentée (30) peut être amenée hors de prise d'avec le segment denté (34) pour le desserrement du frein à main hors de la position de freinage respective par le biais d'une barre comprimable (22) disposée de façon à pouvoir être déplacée dans le sens de la longueur au milieu du levier à main (13) et actionnable manuellement par sollicitation d'un ressort (21).

2. Frein à main selon la revendication 1, **caractérisé en ce que** le verrou de blocage de rotation est une roue libre pour la roue dentée (30).

3. Frein à main selon les revendications 1 et 2, **caractérisé en ce que** la roue dentée (30) est disposée de façon à pouvoir pivoter sur un bras de levier (29) d'un levier de changement de vitesse (26) disposé de façon à pouvoir pivoter au niveau du levier à main (13) et au niveau de l'autre bras de levier (28) duquel la barre comprimable (22) sollicitée par ressort est articulée.

4. Frein à main selon les revendications 1 à 3, **caractérisé en ce que** la roue dentée (30) est maintenue en prise avec le segment denté (34) via un ressort (21) associé à la barre comprimable (22).

5. Frein à main selon les revendications 1 à 4, **caractérisé en ce qu'**un bouton d'actionnement (23) est associé à l'extrémité libre de la barre comprimable (22).

6. Frein à main selon les revendications 1 à 5, **caractérisé en ce que** le segment denté (34) est disposé à une certaine distance de l'axe de pivotement (14) du levier à main (13) et du point central du cercle partiel de l'endentement du segment denté 34, sur le même axe que l'axe de pivotement (14) du levier à main (13).
